# EUROPEAN PATENT APPLICATION

(11) **EP 3 306 413 A1**
(43) Date of publication of application: **11.04.2018**
(21) Application number: 17192744.5
(22) Date of filing: 22.09.2017
(51) Int. Cl.: G03G 21/18

(54) **VERIFICATION SYSTEM OF REPLACEMENT MEMBER**

(30) Priority: 27.09.2016 US 201615277326
(71) Applicant: KABUSHIKI KAISHA TOSHIBA, Minato-ku Tokyo 105-8001 (JP); Toshiba TEC Kabushiki Kaisha, Tokyo 141-8562 (JP)
(72) Inventor: WADA, Takuya, Shinagawa-ku, Tokyo 141-8562 (JP)
(74) Representative: Takeuchi, Maya

(57) **Abstract**

According to one embodiment, a verification system includes a first replacement member and an image processing apparatus. The first replacement member is a replacement member of an image processing apparatus, detachably attached to the image processing apparatus, and provided with a machine-readable code. The image processing apparatus reads the code placed on the reading surface, transmits the read code image data or the like to a predetermined transmission destination in advance, and receives, from the transmission destination, the verification result of whether the data coincides with first information uniquely identifying the replacement member and registered in advance. The image processing apparatus permits an operation using the first replacement member when the verification result is positive and prohibits the operation using the first replacement member when the verification result is negative.

## Description

### FIELD

Embodiments described herein relate generally to a system for verifying whether a replacement member such as a color material bottle used for an image processing apparatus is a genuine product.

### BACKGROUND

An image processing apparatus is mounted with toner bottles of respective colors of cyan (C), magenta (M), yellow (Y), and black (K), and forms an image on a sheet. Further, there are apparatuses for forming an image using a decolorable color material that is decolored through heating at a predetermined decoloring temperature.

In the related art, in order to detect whether a genuine product is mounted when a toner bottle is mounted on the image processing apparatus, security IC substrates are provided on a main body of the image processing apparatus and on the toner bottle. When these security IC substrates communicate with each other, the image processing apparatus verifies whether the toner bottle is a genuine product.

Since the verification using security IC substrates requires IC chips, the verification in this manner requires a high cost due to the man hour and expenses.

To solve the above-mentioned problems, there is provided a verification system comprising: a first replacement member that is a replacement member of an image processing apparatus detachably attached to the image processing apparatus, the first replacement member being provided with a machine-readable code; and an image processing apparatus including: a reading unit that has a reading surface and reads the code placed on the reading surface; a communication unit that transmits code data read by the reading unit or decoded data obtained by decoding the code data to a predetermined transmission destination and receives, from the transmission destination, a verification result of whether the data coincides with first information uniquely identifying the replacement member and registered in advance; and a control unit that permits an operation using the first replacement member when the verification result based on the code is positive and prohibits the operation using the first replacement member when the verification result is negative.

Preferably, at least a part of the surface of the first replacement member is in a flat surface shape, and the code is formed on the flat surface.

Preferably, the code is a code of data obtained by encrypting the first information, and the image processing apparatus receives the verification result obtained by decoding the encrypted information using a key for decoding by the transmission destination.

Preferably, the image processing apparatus includes a display unit, and the control unit displays a message that prompts to place the code on the reading surface again when the number of times the verification result based on the code is negative does not reach a predetermined number of times.

Preferably, the image processing apparatus prohibits the operation using the first replacement member when the number of times the verification result based on the code is negative reaches the predetermined number of times.

Preferably, the reading unit which reads the code of the image processing apparatus is a scanning unit that reads a documents sheet placed on the reading surface.

The present invention further relates to a replacement member that is a replacement member of an image processing apparatus and is detachably attached to the image processing apparatus, the replacement member comprising:a machine-readable code obtained by encoding first information that uniquely identifies the replacement member and indicates the replacement member as a genuine product.

Preferably, at least a part of the surface of the replacement member is a flat surface, and the code is formed on the flat surface.

The present invention further relates to an image processing apparatus comprising: a reading unit that has a reading surface and reads a machine-readable code provided in a replacement member of the image processing apparatus; and
a control unit that permits an operation using the replacement member when a result of verification between the code data read by the reading unit or decoded data obtained by decoding the code data and first information that uniquely identifies the replacement member is positive and prohibits the operation using the replacement member when the verification result is negative.

The apparatus may further comprise: a communication unit that transmits the code data read by the reading unit or the decoded data obtained by decoding the code data to a predetermined transmission destination and receives the verification result by the transmission destination.

The apparatus may further comprise: a memory unit that stores first information for uniquely identifying the replacement member, wherein it is verified whether the code data read by the reading unit or the decoded data obtained by decoding the code data coincide with the first information.

The apparatus may further comprise: a display unit, wherein the control unit displays a message that prompts to place the code on the reading surface again when the number of times the verification result based on the code is negative does not reach a predetermined number of times.

Preferably, the control unit prohibits the operation using the first replacement member when the number of times the verification result based on the code is negative reaches the predetermined number of times.

Preferably, the reading unit which reads the code of the image processing apparatus is a scanning unit that reads a document sheet placed on the reading surface.

### DESCRIPTION OF THE DRAWINGS

FIG. 1 is a view showing a configuration example of a verification system according to an embodiment.
FIG. 2 is a view schematically showing an example of an internal configuration of an image processing apparatus according to the embodiment.
FIG. 3 is a block diagram showing a configuration example of the image processing apparatus according to the embodiment.
FIGS. 4A and 4B are views showing an example of a toner bottle.
FIG. 5 is a flowchart showing an example of an operation when verification information is registered and a bar code is generated, according to the embodiment.
FIG. 6 is a flowchart showing an example of an operation when a toner bottle is mounted on the image processing apparatus.
FIG. 7 is a flowchart showing an example of an operation at the time of verification by a server.

### DETAILED DESCRIPTION

A verification system of an embodiment includes a first replacement member, an image processing apparatus, and a server apparatus.

The first replacement member of the embodiment is a replacement member of the image processing apparatus, detachably attached to the image processing apparatus. The first replacement member is provided with a machine-readable code.

The image processing apparatus of the embodiment includes a reading unit, a communication unit, and a control unit. The reading unit has a reading surface and reads the code placed on the reading surface. The communication unit transmits code image data read by the reading unit or decoded data obtained by decoding the code image data to a predetermined transmission destination and receives a verification result from the transmission destination. The control unit permits an operation using the first replacement member when the verification result based on the code is positive and prohibits the operation using the first replacement member when the verification result is negative.

The server apparatus of the embodiment includes a communication control unit and a control unit. The communication control unit receives code image data or decoded data transmitted from an image processing apparatus. The control unit verifies whether the data received by the communication unit coincides with first information uniquely identifying a replacement member and registered in advance and causes the communication control unit to transmit a verification result to the image processing apparatus.

In the present embodiment, a bar code for verification is attached to a surface of a container of a toner bottle at a stage before shipment of the toner bottle. When the toner bottle is mounted on the image processing apparatus, the bar code attached to the surface of the container is scanned by a unit of the image processing apparatus that reads a document sheet. The image processing apparatus transmits the scanned barcode image or a value and character data obtained by decoding the bar code to a server.

The server determines whether the tonner bottles are genuine products by comparing registered data with data to be transmitted for verification. The server transmits the verification result to the image processing apparatus. When it is determines that the toner bottle is a genuine product, the image processing apparatus controls the toner bottle to be effectively used. Thereafter, it becomes possible to form images using the toner bottle. Meanwhile, when it is determines that the toner bottle is not a genuine product, the image processing apparatus performs control such that the use of the toner bottle is prohibited and suppressed.

In the present embodiment, since a scanning unit (hardware) installed on the image processing apparatus in advance is used, only a bar code indicating information of the toner bottle and control logic (program) are required to be prepared. Therefore, it is possible to more reduce the man hour and expenses than a case where a security IC or a substrate of the related art is installed.

The image processing apparatus according to the embodiment can perform both of printing using a decolorable color material and printing using a non-decolorable color material. The decolorable color material is decolored when the decolorable color material is fixed to a sheet at a predetermined fixing temperature or higher and heated at a predetermined decoloring temperature or higher which is higher than or equal to the predetermined fixing temperature. The decolorable color material includes a coloring compound, a developer, and a decoloring agent. A leuco dye may be exemplified as the coloring compound. Phenols may be exemplified as the developer. A substance which is compatible with a coloring compound when heated and does not have an affinity for a developer may be exemplified as the decoloring material. The decolorable color material is colored by an interaction between a coloring compound and a developer and decolored by a disconnected interaction between the coloring compound and the developer when heated at the decoloring temperature or higher.

In the embodiment, description will be given on a case where a toner is used as an example of a color material. The embodiment is applicable to a case where an image forming process is performed using an ink. The term "decoloring" in the embodiment indicates making an image invisible which is formed with colors (including chromatic colors as well as achromatic colors such as white and black) other than the foundation color of a sheet. The expression "making an image invisible" may be achieved by making an image formed with colors other than the foundation color of sheets colorless (transparent) or discoloring an image formed with colors other than the foundation color of sheets to a color which is the same as or close to the foundation color of sheets.

Hereinafter, embodiments will be described with reference to the accompanying drawings.

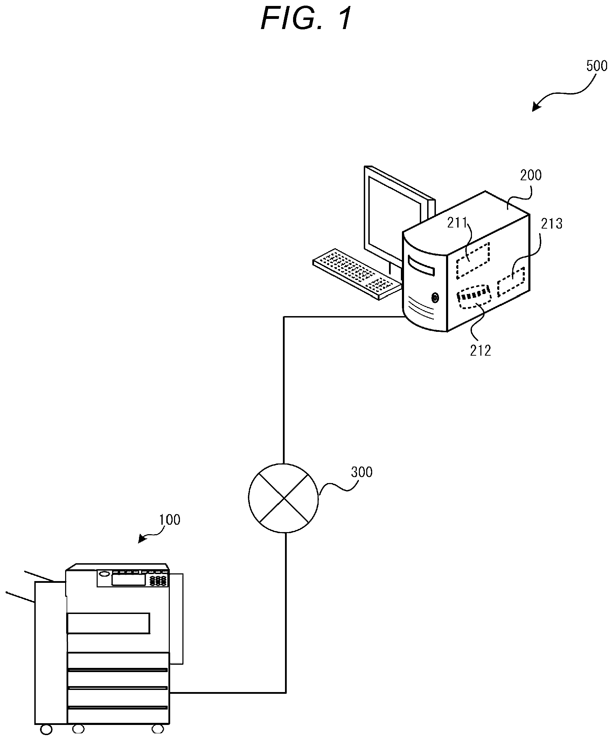

FIG. 1 is a view showing the configuration example of a system for verifying toner bobbles according to the embodiment. A verification system 500 includes an image processing apparatus 100 and a server 200. The image processing apparatus 100 is disposed in, for example, a customer's office of a device supplier and the server 200 is disposed in a support center, a data center, or the like under the management of the manufacturing company.

The image processing apparatus 100 and the server 200 transmit and receive data via a network 300 including a plurality of communication devices such as a router and a switch. One image processing apparatus 100 and one server 200 are shown in the example of FIG. 1, but a one-to-many or many-to-many configuration may be employed.

The server 200 includes a processor 211, a memory unit 212, and a communication control unit 213.

The processor 211 is an arithmetic processing unit such as a central processing unit (CPU). The processor 211 realizes various functions by executing programs stored in the memory unit 212.

The memory unit 212 is a unit including a main memory that stores data in a volatile manner and directly inputs and outputs data to and from the processor 211. Further, the memory unit 212 is a unit that includes a ROM and an auxiliary memory and stores a control program or data in a non-volatile manner. The processor 211 integrally controls each unit of the server 200 by executing an operation of the control program stored in the memory unit 212 in advance.

The communication control unit 213 is a unit for controlling data communication between the image processing apparatus 100 and the communication control unit 213. The communication control unit 213 includes a network card connected to the network 300 in a wired or wireless manner.

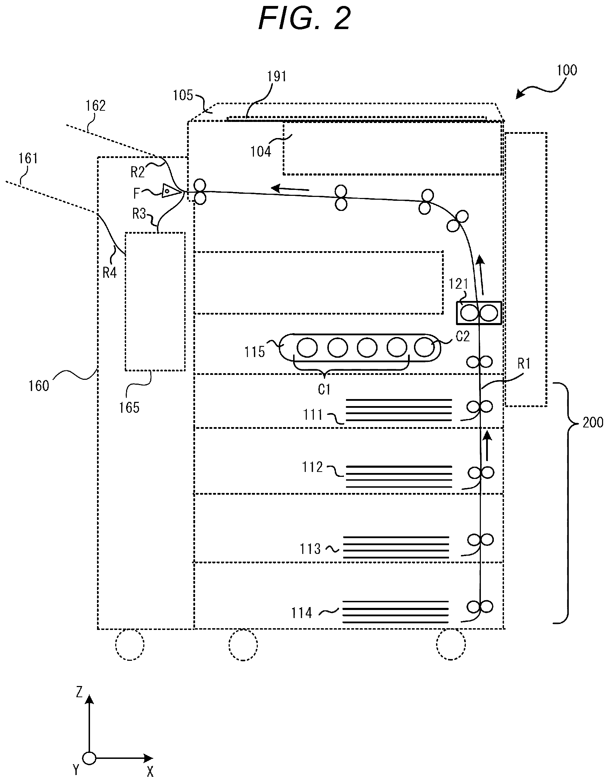

FIG. 2 is a view schematically showing an example of the internal configuration of the image processing apparatus. Further, an X-axis, a Y-axis, and a Z-axis of the drawings are common in each drawing. The arrows in FIG. 2 indicate the conveyance direction of sheets.

The image processing apparatus 100 includes cassettes 111, 112, 113, and 114 which store sheets and supply the sheets during execution of a job. The cassettes 111, 113, 114 each store unused new sheets having a variation in size. The cassette 112 stores used sheets on which images are formed using a decolorable color material. In other words, the cassette 112 stores sheets which can be reused because images formed thereon are removed by carrying out a decoloring process. In the present example, the decoloring process indicates a heating process performed on sheets on which images are formed using a decolorable color material at a decoloring temperature or higher which is higher than a fixing temperature.

Hereinafter, the cassettes 111, 113, and 114 are referred to as regular cassettes and the cassette 112 is referred to as a used cassette. Moreover, the cassettes 111 to 114 are used as paper feeding units 200.

The image processing apparatus 100 includes an image forming unit 115 that forms an image on a sheet. The image forming unit 115 is capable of performing both of printing using a decolorable color material and printing using a non-decolorable color material. The image forming unit 115 includes a regular toner bottle storing unit C1 for storing and mounting the toner bottle of typical color materials which are non-decolorable color materials. A regular toner bottle storing unit C1 is capable of storing and mounting the toner bottle of respective colors of cyan, magenta, yellow, and black. Further, the image forming unit 115 includes a decoloring toner bottle storing unit C2 for storing and mounting the toner bottle of a decolorable color material.

The image processing apparatus 100 includes a heater 121 that heats and presses sheets on which images are formed so that the images are fixed to the sheets. The heater 121 can switch the heating temperature between a fixing temperature and a decoloring temperature which is higher than the fixing temperature. The image processing apparatus 100 can perform a decoloring process on sheets fed from the used cassette 112 by heating the sheets at a decoloring temperature.

The image processing apparatus 100 includes a conveyance path R1 that sequentially conveys sheets to the paper feeding unit 200, the image forming unit 115, the heater 121, and a post-processing device 160 described below. Moreover, the image processing apparatus 100 includes an operation panel 104 that receives an instruction to input parameter values such as the number of print copies or start processing from a user and displays the progress situation of a job or a message.

The image processing apparatus 100 includes a scanning unit 105. The scanning unit 105 reads a document sheet disposed on a transparent glass plate 191 which is a reading surface. The scanning unit 105 includes a light emitting unit, a charge-coupled device (CCD) image sensor, and a carrier mechanism for moving the light emitting unit and the CCD image sensor. An image read by the scanning unit 105 is output to the image forming unit 115, and the image forming unit 115 forms the image on a sheet (copying).

Further, the scanning unit 105 reads a two-dimensional bar code serving as data for verification of a toner bottle 400 (described below). The read data is transmitted to the server 200.

The image processing apparatus 100 includes the post-processing device 160 on which options can be mounted. The post-processing device 160 performs path switching such that sheets conveyed via the conveyance path R1 are continuously conveyed by any of a conveyance path R2 and a conveyance path R3 using a flapper F. When the sheets are conveyed by the conveyance path R2, the sheets are output to a discharge tray 162. Further, when the sheets are conveyed by the conveyance path R3, the sheets are placed on a processing tray in the post-processing unit 165, and the post-processing unit 165 bundles plural sheets, aligns the sheet bundle, and performing post-processing of any of stapling, punching, and a center folding process on the sheet bundle. The sheet bundle after the post-processing is output to a discharge tray 161 through the conveyance path R4.

The discharge tray 161 is a movable tray in the vertical direction and the discharge tray 162 is a non-movable tray. The discharge tray 161 is also referred to as a movable tray and the discharge tray 162 is also referred to as a fixed tray.

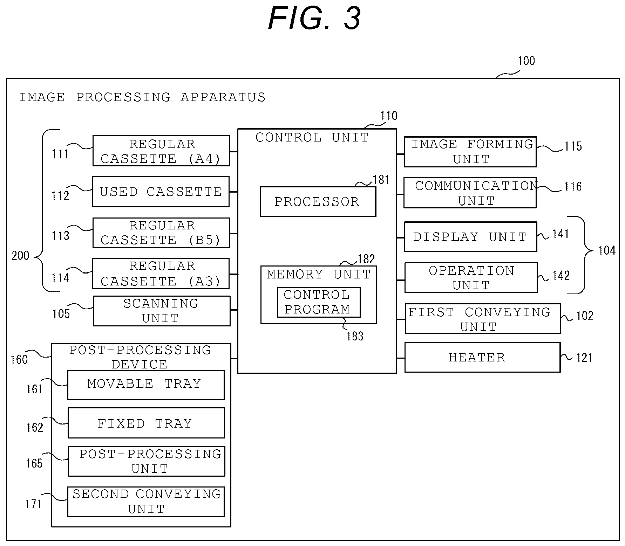

FIG. 3 is a block diagram showing an example of the configuration of the image processing apparatus 100. The image processing apparatus 100 includes a control unit 110 including at least a processor 181 and a memory unit 182. The processor 181 is an arithmetic processing unit such as a CPU. The processor 181 realizes various functions by executing a control program 183 stored in the memory unit 182. The memory unit 182 is a unit that includes a main memory that stores data in a volatile manner, a ROM that stores data in a non-volatile manner, and an auxiliary memory. The control unit 110 integrally controls each unit of the image processing apparatus 100 by the processor 181 executing an operation of the control program 183 stored in the memory unit 182 in advance. Further, a part or all of the functions provided by the control unit 110 may be installed using a circuit such as an application specific integrated circuit (ASIC).

The image processing apparatus 100 includes a communication unit 116. The communication unit 116 receives print data from a personal computer based on an instruction of the control unit 110 and sends the processing result or the like to a transmission source. The image processing apparatus 100 receives print data and forms an image of the print data on a sheet (printing process). Since the communication unit 116 is connected to the network 300, the communication unit 116 controls transmitting and receiving data between the server 200 and the network 300.

The operation panel 104 includes a display unit 141 which is a flat liquid crystal monitor; and an operation unit 142 including physical buttons and a touch panel laminated on the display unit 141. A first conveying unit 102 includes a conveyance path R1 and conveys sheets to each unit according to an instruction of the control unit 110.

The regular cassettes 111, 113, and 114 and the used cassette 112 illustrated in FIG. 3 are as described above and the size of sheets to be stored is described in parentheses of Fig. 3. In the present example, the regular cassette 111 stores A4-size sheets. Further, the regular cassette 113 stores B5-size sheets and the regular cassette 114 stores A3-size sheets. The reuse cassette 112 stores sheets having a predetermined size, and the size thereof is not particularly limited in the present example.

The scanning unit 105, the image forming unit 115, and the heater 121 are as described above.

The movable tray 161, the fixed tray 162, and the post-processing unit 165 in the post-processing device 160 are also as described above. A second conveying unit 171 includes conveyance paths R2, R3, and R4, and the flapper F and conveys sheets to each unit and each discharge tray according to an instruction of the control unit 110.

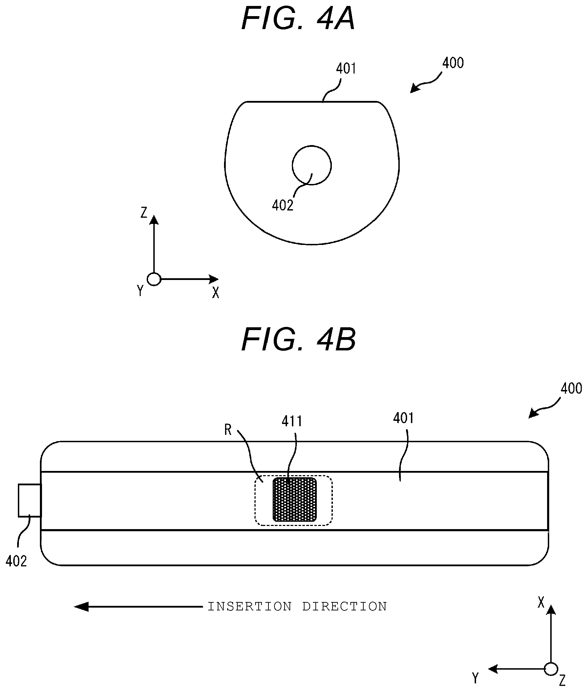

FIGS. 4A and 4B show the external shape of the toner bottle 400 detachably attached to the image processing apparatus 100. FIG. 4A shows the shape of the toner bottle 400 when seen from a coupling cap 402 side and FIG. 4B shows the shape of the toner bottle 400 when seen from the upper side. The inside of the toner bottle 400 is filled with any of toners of respective colors of cyan, magenta, yellow, and black and a decoloring toner. In the present example, the toner bottle 400 is mounted on the image processing apparatus 100 by being inserted into the toner bottle storing units C1 and C2 with the coupling cap 402 as a tip end. The toner bottle 400 is taken out from the toner bottle storing units C1 and C2 by pressing down physical switches provided in the toner bottle storing units C1 and C2.

The toner bottle 400 is in a cylindrical shape as shown in the figure, but a flat surface 401 is formed on a part thereof (upper portion of Z-axis in the present example). A two-dimensional bar code 411 for verification is attached to the flat surface 401.

The scanning unit 105 reads the two-dimensional bar code 411 attached to the toner bottle 400. When the two-dimensional bar code 411 is read by the scanning unit 105, the transparent glass plate 191 and the flat surface 401 are disposed so as to face each other. According to the present embodiment, in this manner, a part of the surface is flattened and the two-dimensional bar code 411 is attached to the flat surface such that the toner bottle 400 does not roll over on the transparent glass plate 191. Moreover, in the present example, the entire surface of the toner bottle 400 in the longitudinal direction is set as the flat surface 401, but only the periphery of the attached two-dimensional bar code 411, for example, a region R shown by the broken line may be set as the flat surface 401.

The two-dimensional bar code 401 includes information originally written in a security IC chip, such as information related to a final destination of the toner bottle 400 or the serial number. The two-dimensional bar code 401 is obtained by making data, in which the information related to the final destination and the serial number are encrypted, into a bar code. The information related to the final destination and the serial number are allocated by the server 200 at the stage of pre-shipment of the toner bottle 400.

In the present example, the two-dimensional bar code 401 is a seal whose rear side is an adhesive surface and the seal is attached to the flat surface 401. Further, the two-dimensional bar code may be carved on the flat surface 401 by performing laser processing or the like. In place of the two-dimensional bar code, other machine-readable formats such as character strings and digit strings which can be read by a one-dimensional bar code or an OCR may be employed.

A decryption key for decoding encrypted data is stored in the memory unit 212 of the server 200 in advance. Further, the allocated information related to the final destination and the allocated serial number of the toner bottle 400 are stored (registered) in the memory unit 212 in advance.

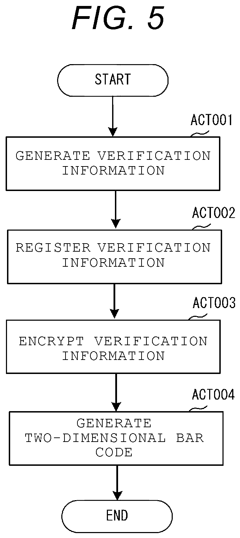

Next, the operation examples of the verification system 500 will be described with reference to each flowchart of FIGS. 5 to 7. First, generation of verification information and the registration operation which are performed before shipment of the toner bottle 400 will be described with reference to FIG. 5. The contents of FIG. 5 are realized by the processor 211 of the server 200 executing an operation of a program stored in the memory unit 212.

In the example described below, description is made such that the toner bottle 400 is filled with a decoloring toner and is mounted and stored in the decoloring toner bottle storing unit C2. Further the same applies to a case where the toner bottle 400 is filled with any color of a typical toner and is mounted and stored in the decoloring toner bottle storing unit C 1.

The processor 211 of the server 200 generates verification information (ACT001). The verification information is data for uniquely identifying each toner bottle to be produced. In the present example, the verification information indicates information related to the final destination and the serial number of the product. The processor 211 generates verification information based on manual input of a user or data transmitted from other production systems (ACT001).

The processor 211 registers the generated verification information to the memory unit 212 (ACT002). In the present example, a database system is introduced to the memory unit 212 so that the verification information is registered to this database system.

The processor 211 encrypts the verification information (ACT003). In the present example, a common key cryptosystem in which the encryption key and the decryption key are the same as each other is employed, but other systems such as a public key cryptosystem may be employed. The common key is stored in the memory unit 212 in advance and the processor 211 encrypts the verification information using this common key.

The processor 211 converts (encodes) the encrypted verification information into the two-dimensional bar code (ACT004). This two-dimensional bar code is printed out in a seal shape and attached to the flat surface 401 of the toner bottle 400.

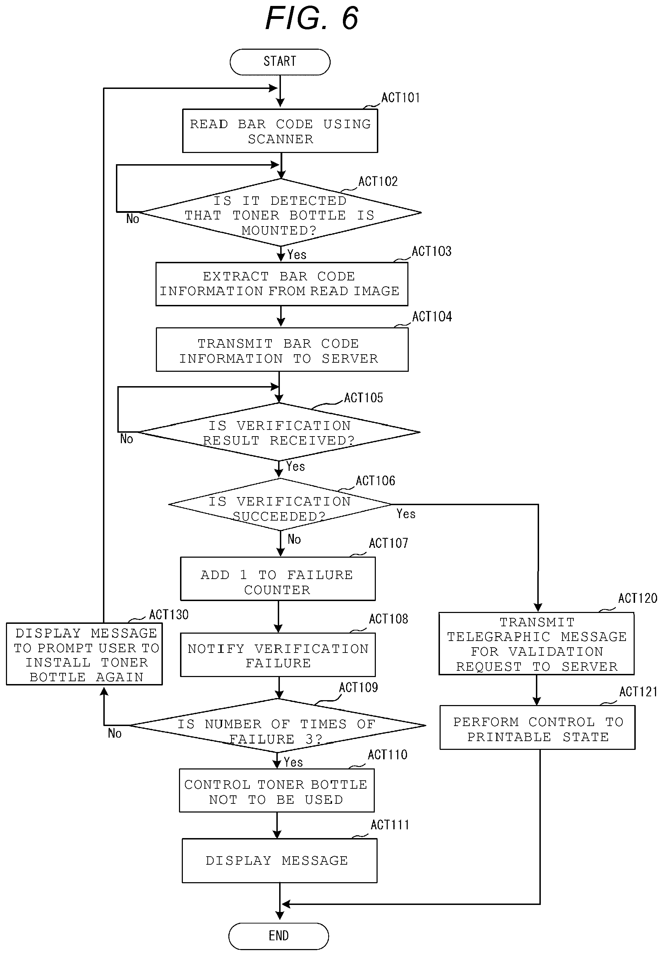

FIG. 6 is a flowchart showing an example of an operation when the toner bottle 400 is mounted on the image processing apparatus 100. The contents of FIG. 6 are realized by the processor 181 executing the operation of the control program 183.

The user places the flat surface 401 of the toner bottle 400 on the transparent glass plate 191 of the scanning unit 105 such that the flat surface 401 faces the transparent glass plate 191. In addition, the user performs a predetermined operation on the operation panel 104 for mounting the toner bottle. The processor 181 executes the following operation according to this operation of the user.

The processor 181 operates the scanning unit 105, reads the two-dimensional bar code 411 attached to the flat surface 401, and sets this read bar code as image data (ACT101). This image data is temporarily stored in the memory unit 182.

The processor 181 waits for the toner bottle 400 to be mounted on the decoloring toner bottle storing unit C2 (loop of No in ACT102). The processor 181 determines ACT102 according to a detection signal from a sensor provided in the decoloring toner bottle storing unit C2. In ACT102, the operation panel 104 may display a message that prompts to insert the toner bottle 400 into the image processing apparatus 100.

When the toner bottle 400 is mounted on the decoloring toner bottle storing unit C2 (ACT102: Yes), the processor 181 extracts (decodes) bar code information (text data of letters or numbers) from the read image (ACT103). The bar code information obtained here is originally encrypted verification information. The processor 181 controls the communication unit 116 and transmits the bar code information to the server 200 (ACT104). Further, the processor 181 may transmit the read image itself to the server 200. In this case, the process of extracting the bar code information from the image is executed by the server 200.

The processor 181 waits until the result of the verification process executed by the server 200 is received (loop of No in ACT105).

When the verification result is received (ACT105: Yes), the processor 181 determines whether the result is a success (ACT106). When it is determined that the result is a success (ACT106: Yes), the processor 181 transmits a telegraphic message for a validation request (ACT120) and performs control such that image formation can be carried out using the toner bottle 400 (ACT121). This control indicates an operation of changing a value of a flag sequentially checked during an image forming operation to a value indicating validity. This control is merely an example, and the aspect thereof is not limited thereto. The processor 181 checks the value of this flag during the image forming operation and performs image formation only when the value indicates validity. Hereinafter, image formation using the toner bottle 400 can be carried out.

Moreover, the processor 181 can confirm that a genuine product is continuously used by inquiring the server 200 whether the toner bottle 400 is valid or not regularly or when necessary during image formation or the like.

Meanwhile, when the verification result is a failure (ACT106: No), the processor 181 adds 1 to a counter that counts the number of times of failure (ACT107). The processor 181 controls the operation panel 104 and displays that the verification result is a failure or notifies the user of the result by voice (ACT108). The processor 181 compares the value of the counter with a predetermined value and determines whether the failure is continued predetermined times (ACT109). In the present example, the number of predetermined times of failure is set to 3.

When the number of times of failure is less than 3 (ACT109: No), the processor 181 displays a message that prompts the user to install the toner bottle 400 on the glass transparent plate 191 again (ACT130) and the process returns to ACT101. Meanwhile, when the number of times of failure reaches three (ACT109: Yes), the processor 181 performs control such that the use of the toner bottle 400 is prohibited (ACT110). ACT110 indicates an operation of changing the value of the flag sequentially checked during the image forming operation to a value indicating invalidity. This control is merely an example, and the aspect thereof is not limited thereto. The processor 181 checks the value of this flag during the image forming operation and does not perform image formation even when the toner bottle 400 is mounted if the value indicates invalidity. In addition, the processor 181 regularly displays the message that prompts the user to confirm whether a genuine product is mounted on the operation panel 104 (ACT111).

Moreover, when the toner bottle 400 is removed from the main body of the image processing apparatus 100, the processor 181 changes the value of the flag sequentially checked during image formation to a value indicating invalidity and transmits a telegraphic message for an invalidation request to the server 200.

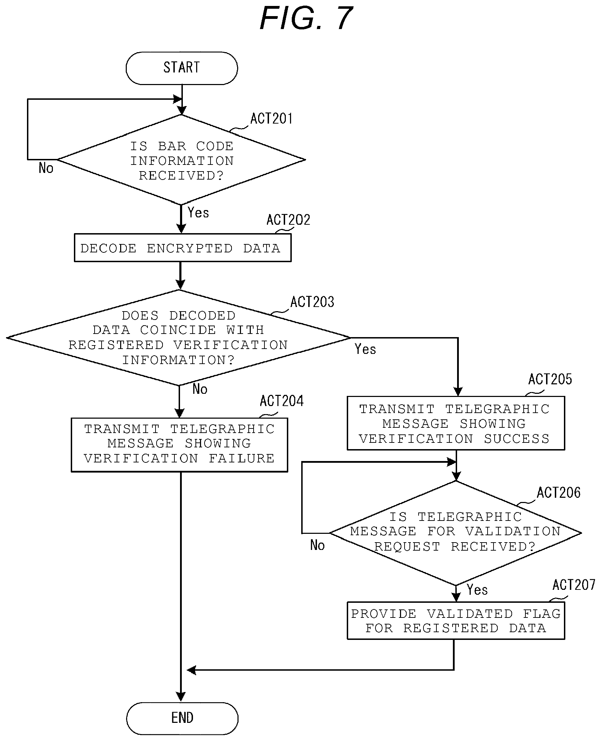

FIG. 7 is a flowchart showing a verification operation executed by the server 200. The processor 211 of the server 200 waits until the communication control unit 213 receives bar code information (loop of No in ACT201). When the communication control unit 213 receives the bar code information (ACT201: Yes), the encrypted bar code information is decoded using the common key stored in the memory unit 212 (ACT202). The processor 181 determines whether the decoded verification information coincides with the information registered to the database system (ACT203).

When the verification information does not coincide with the information (ACT203: No), the processor 211 transmits a telegraphic message indicating that the verification result is a failure to the image processing apparatus 100 (ACT204). Further, the same applies to a case where the data is not successfully decoded and the processor 211 performs the process of ACT204.

When the verification information coincides with the information (ACT203: Yes), the processor 211 transmits a telegraphic message indicating that the verification result is a success to the image processing apparatus 100 (ACT205). The processor 206 determines whether the telegraphic message for a validation request is received from the image processing apparatus 100 (ACT206) and provides a validated flag (ACT207) to the verification information registered to the database system when the telegraphic message is received (ACT206: Yes). Thereafter, when an inquiry about the propriety of the validity is received from the image processing apparatus 100, the processor 211 determines whether the toner bottle being used is a genuine product by confirming the presence of the validated flag.

Moreover, when a telegraphic message for an invalidation request is received from the image processing apparatus 100, the processor 211 sets the value indicating invalidity of the validated flag or the value indicating suspension of use. In this manner, the use of the toner bottle 400 is prohibited until the operations of FIGS. 6 and 7 are performed again.

In the present embodiment, the description is made that the two-dimensional bar code is directly attached to the toner bottle 400, but the two-dimensional bar code may be attached to an attachment such as a packing box.

In the present embodiment, a toner bottle is exemplified as a replacement member or a replenishing member, but the member is not limited thereto. A member which can be detachably attached to an image processing apparatus such as a process cartridge can be applied.

In the present embodiment, the functions (ACT001 to ACT004 in FIG. 5) performed by the processor 211 of the server 200 and the database system stored in the memory unit 212 may be replaced by the functions and the configurations of the image processing apparatus 100. When such a configuration is employed, the decoding process (ACT202) and the verification process (ACT203) executed by the server 200 can be performed by the control unit 110 of the image processing apparatus 100. For example, this can be realized by replacing the processes of ACT104 and ACT105 of FIG. 6 by the processes of ACT202 and ACT203 of FIG. 7.

Further, the process of providing the validated flag, which is performed by the processor 211 of the server 200 (ACT207 of FIG. 7), may be performed by the control unit 110 of the image processing apparatus 100. For example, this can be realized by replacing the process of ACT120 of FIG. 6 by the process of ACT207 of FIG. 7.

As described above, according to the technique described in the specification, it is possible to perform an operation with a reduction in man hour of production and a lower cost compared to a system of the related art.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope of the inventions.

## Claims

1. A system comprising:
an image processing apparatus ;
a first replacement member that is a replacement member of the image processing apparatus detachably attached to the image processing apparatus, the first replacement member being provided with a machine-readable code wherein
the image processing apparatus includes:
a reading unit that has a reading surface and reads the code placed on the reading surface;
a communication unit that transmits code data read by the reading unit or decoded data obtained by decoding the code data to a predetermined transmission destination and receives, from the transmission destination, a verification result of whether the data coincides with first information uniquely identifying the replacement member and registered in advance; and
a control unit that permits an operation using the first replacement member when the verification result based on the code is positive and prohibits the operation using the first replacement member when the verification result is negative.

2. The system according to Claim 1,
wherein at least a part of the surface of the first replacement member is in a flat surface shape, and
the code is formed on the flat surface.

3. The system according to Claim 1 or 2,
wherein the code is a code of data obtained by encrypting the first information, and
the image processing apparatus receives the verification result obtained by decoding the encrypted information using a key for decoding by the transmission destination.

4. The system according to any one of Claims 1 to 3,
wherein the image processing apparatus includes a display unit, and
the control unit displays a message that prompts to place the code on the reading surface again when the number of times the verification result based on the code is negative does not reach a predetermined number of times.

5. The system according to any one of Claims 1 to 4,
wherein the image processing apparatus prohibits the operation using the first replacement member when the number of times the verification result based on the code is negative reaches the predetermined number of times.

6. The system according to any one of Claims 1 to 5,
wherein the reading unit which reads the code of the image processing apparatus is a scanning unit that reads a documents sheet placed on the reading surface.

7. A replacement member that is a replacement member of an image processing apparatus and is detachably attached to the image processing apparatus, the replacement member comprising:
a machine-readable code obtained by encoding first information that uniquely identifies the replacement member and indicates the replacement member as a genuine product.

8. The member according to Claim 7,
wherein at least a part of the surface of the replacement member is a flat surface, and
the code is formed on the flat surface.

9. An image processing apparatus comprising:
a reading unit that has a reading surface and reads a machine-readable code provided in a replacement member of the image processing apparatus; and
a control unit that permits an operation using the replacement member when a result of verification between the code data read by the reading unit or decoded data obtained by decoding the code data and first information that uniquely identifies the replacement member is positive and prohibits the operation using the replacement member when the verification result is negative.

10. The apparatus according to Claim 9, further comprising:
a communication unit that transmits the code data read by the reading unit or the decoded data obtained by decoding the code data to a predetermined transmission destination and receives the verification result by the transmission destination.

11. The apparatus according to Claim 9 or 10, further comprising:
a memory unit that stores first information for uniquely identifying the replacement member,
wherein it is verified whether the code data read by the reading unit or the decoded data obtained by decoding the code data coincide with the first information.

12. The apparatus according to any one of Claims 9 to 11, further comprising:
a display unit,
wherein the control unit displays a message that prompts to place the code on the reading surface again when the number of times the verification result based on the code is negative does not reach a predetermined number of times.

13. The apparatus according to any one of Claims 9 to 12,
wherein the control unit prohibits the operation using the first replacement member when the number of times the verification result based on the code is negative reaches the predetermined number of times.

14. The apparatus according to any one of Claims 8 to 13,
wherein the reading unit which reads the code of the image processing apparatus is a scanning unit that reads a document sheet placed on the reading surface.
